# EUROPÄISCHE PATENTSCHRIFT

(11) **EP 2 275 989 B1**
(45) Veröffentlichungstag und Bekanntmachung des Hinweises auf die Patenterteilung: **12.09.2012**
(21) Anmeldenummer: 09164663.8
(22) Anmeldetag: 06.07.2009
(51) Int. Cl.: G06T 7/00

(54) **Stereoskopische 3D-Kamera**
Stereoscopic 3D camera
Caméra 3D stéréoscopique

(43) Veröffentlichungstag der Anmeldung: 19.01.2011
(73) Patentinhaber: SICK AG, 79183 Waldkirch (DE)
(72) Erfinder: Rothenberger, Bernd, 79206 Breisach (DE); MacNamara, Shane, 79285 Ebringen (DE)
(74) Vertreter: Ludewigt, Christoph

(56) Entgegenhaltungen:
- EP-A- 1 355 274
- DE-A1-102007 031 157
- YAO J ET AL: "3D modeling and rendering from multiple wide-baseline images by match propagation" SIGNAL PROCESSING. IMAGE COMMUNICATION, ELSEVIER SCIENCE PUBLISHERS, AMSTERDAM, NL, Bd. 21, Nr. 6, 1. Juli 2006 (2006-07-01), Seiten 506-518, XP025080520 ISSN: 0923-5965 [gefunden am 2006-07-01]
- LHUILLIER M ET AL: "Match propagation for image-based modeling and rendering" IEEE TRANSACTIONS ON PATTERN ANALYSIS AND MACHINE INTELLIGENCE, IEEE SERVICE CENTER, LOS ALAMITOS, CA, US, Bd. 24, Nr. 8, 1. August 2002 (2002-08-01), Seiten 1140-1146, XP011094701 ISSN: 0162-8828

## Beschreibung

Die Erfindung betrifft eine stereoskopische 3D-Kamera und ein Verfahren zur stereoskopischen Erzeugung einer dreidimensionalen Tiefenkarte nach dem Oberbegriff von Anspruch 1 beziehungsweise 11.

Kameras werden seit langem zur Überwachung eingesetzt und finden zunehmend auch Anwendung in der Sicherheitstechnik. Eine typische sicherheitstechnische Anwendung ist die Absicherung einer gefährlichen Maschine, wie etwa einer Presse oder eines Roboters, wo bei Eingriff eines Körperteils in einen Gefahrenbereich um die Maschine herum eine Absicherung erfolgt. Dies kann je nach Situation die Abschaltung der Maschine oder das Verbringen in eine sichere Position sein.

Die ständig zunehmende Verfügbarkeit leistungsstarker Rechner ermöglicht, Echtzeitanwendungen wie einer Überwachungsaufgabe dreidimensionale Bilddaten zugrunde zu legen. Ein bekanntes Verfahren zu deren Gewinnung ist die Stereoskopie. Dabei werden Bilder der Szenerie mit einem Empfangssystem, das im Wesentlichen aus zwei zueinander beabstandeten Kameras besteht, aus leicht unterschiedlichen Perspektiven gewonnen. In den überlappenden Bildbereichen werden gleiche Strukturen identifiziert und aus der Disparität und den optischen Parametern des Kamerasystems mittels Triangulation Entfernungen und somit ein dreidimensionales Bild beziehungsweise eine Tiefenkarte berechnet.

Stereoskopische Kamerasysteme bieten gegenüber herkömmlichen sicherheitstechnischen Sensoren wie Scannern und Lichtgittern den Vorteil, flächendeckend Tiefeninformationen aus einer zweidimensional aufgenommenen Beobachtungsszenerie zu ermitteln. Mit Hilfe der Tiefeninformationen können in sicherheitstechnischen Anwendungen Schutzbereiche variabler und genauer festgelegt und mehr und genauere Klassen von erlaubten Objektbewegungen unterschieden werden. Beispielsweise ist es möglich, Bewegungen des Roboters selbst oder Vorbeibewegungen eines Körperteils an der gefährlichen Maschine in einer unterschiedlichen Tiefenebene als ungefährlich zu erkennen. Das wäre mit einem zweidimensionalen System von einem unzulässigen Eingriff nicht unterscheidbar.

Im Rahmen der Sicherheitstechnik besteht jedoch für eine zuverlässige Sicherheitsfunktion über das sichere Erkennen eines Eingriffs in den bereitgestellten Bilddaten hinaus das Bedürfnis, zunächst überhaupt eine qualitativ hochwertige und hinreichend dichte Tiefenkarte mit verlässlichen Entfernungswerten zu erzeugen, also einen zuverlässigen Abstandswert für jeden relevanten Bildbereich und im Idealfall nahezu jeden Bildpunkt verfügbar zu haben.

Ein Maß für die Verlässlichkeit der geschätzten Entfernungen liefern viele Stereoskopiealgorithmen mit der Tiefenkarte selbst, beispielsweise in Form einer Qualitätskarte, die für jeden Entfernungspixel der Tiefenkarte einen Verlässlichkeitswert hält. Ein denkbares Maß für die Verlässlichkeit ist die Güte der Korrelation der Strukturelemente in dem rechten und linken Bild, die bei der Disparitätsschätzung als gleiche Bildelemente aus den unterschiedlichen Perspektiven der beiden Kameras erkannt wurden. Zusätzlich werden häufig weitere Filter nachgeschaltet, um Voraussetzungen für den Stereoskopiealgorithmus zu überprüfen oder die geschätzten Entfernungen zu plausibilisieren. Die Qualitätskarte enthält dann nicht nur einen Wert, sondern einen Vektor mit verschiedenen Qualitätsmerkmalen des zugehörigen Entfernungspixels. Beispiele derartiger Filter finden sich in der Literatur, etwa in D. Scharstein and R. Szeliski: A taxonomy and evaluation of dense two-frame stereo correspondence algorithms", International Journal of Computer Vision 47(1/2/3): 7-42, April-June 2002.

Die mit Stereoskopieverfahren erzeugten Tiefenkarten enthalten in der Regel Tiefenwerte von unterschiedlicher Qualität. Eine Auswertung unter Einbeziehung unzuverlässiger Entfernungswerte ist in sicherheitstechnischen Anwendungen höchst gefährlich. Wird die Lage, Größe oder Entfernung eines Objekts falsch eingeschätzt, so führt dies möglicherweise dazu, dass die Abschaltung der Gefährdungsquelle unterbleibt, weil der Eingriff des Objekts fehlerhaft als unkritisch eingestuft wird.

Beschränkt man sich umgekehrt darauf, nur sehr zuverlässig geschätzte Entfernungen auszuwerten, so verbleiben in nahezu jeder realistischen Szenerie Lücken in der Tiefenkarte, in denen ein sicherheitsrelevanter Eingriff verborgen bliebe. Das System muss dann sicherheitshalber die Freigabe der überwachten Maschine verweigern, so dass die Verfügbarkeit praktisch gegen Null tendiert.

Folglich entsteht eine Zwickmühle bei der Qualitätsbewertung der Entfernungspixel einer Tiefenkarte. Unterwirft man die Qualitätskarte einer Schwellenoperation, um zuverlässige Entfernungspixel von unzuverlässigen Entfernungspixeln zu trennen, so ist das Ergebnis in aller Regel eine Tiefenkarte, die immer noch gravierende Messfehler enthält und die gleichzeitig schon zu stark ausgedünnt ist. Wendet man zusätzliche Filter an, wie oben angesprochen, so lassen sich zwar möglicherweise die Messfehler auf ein hinnehmbares Maß reduzieren. Die Tiefenkarte ist dann aber erst recht für nachfolgende Auswertungen zu dünn besetzt.

Aus der EP 1 355 274 A2 ist eine 3D-Rekonstruktion aus mehreren Ansichten bekannt. Dabei werden korrespondierende Pixel anhand von Übereinstimmungsfunktionen bestimmt, die jeweils zu Paaren von Ansichten berechnet werden. Korrespondenzen, die sich in mehreren Paaren bestätigen, werden als Keime (seeds) für eine Bereichserweiterung verwendet. Auf zu einem Keim benachbarte Pixel, die sich in ihrer Tiefeninformation nur in einem Fehlerrahmen unterscheiden, wird rekursiv die Tiefeninformation des Keims übertragen.

Die Arbeit von Yao et. al, "3D modeling and rendering from multiple wide-baseline images by match propagation", Signal Processing, Image Communication, Band 21 (6), 1. Juli 2006, Seiten 506-518, Elsevier Science publishers, Amsterdam, befasst sich mit der Modellierung einer komplexen Szenerie aus einem kleinen Satz von Ansichten. Dabei wird anfangs eine kleine Anzahl zuverlässig einander zugeordneter Pixel gewählt und dann unter Berücksichtigung zweier Auswahlbedingungen auf Nachbarpixel durch Interpolation der Tiefenwerte propagiert.

Lhuillier et. al, "Match propagation for image-based modeling and rendering", IEEE Transaction on Pattern Analysis and Machine Intelligence, Band 24 (8), 1. August 2002, Seiten 1140-1142, IEE Service Center, Los Alamitos, befassen sich ebenfalls mit bildbasierter Modellierung und Rendering, wählen aber einen anderen Ansatz. Statt wie bei einem Stereoalgorithmus sämtliche Pixel einer Korrespondenzanalyse zu unterwerfen, werden zunächst nur einzelne Pixel an sogenannten "points of interest" betrachtet. Die Korrepondenzanalyse breitet sich dann immer von demjenigen Pixel mit der besten Übereinstimmung in die Nachbarschaft aus.

Es ist daher Aufgabe der Erfindung, ein 3D-System anzugeben, welches für die Auswertung geeignete Tiefenkarten erzeugt.

Diese Aufgabe wird durch eine 3D-Stereokamera gemäß Anspruch 1 und ein Verfahren zur stereoskopischen Erzeugung einer dreidimensionalen Tiefenkarte gemäß Anspruch 11 gelöst.

Die Erfindung geht von dem Prinzip aus, die Tiefenkarte zunächst lieber dünner und dafür mit zuverlässigen Entfernungspixeln zu besetzen. Anschließend wird ein Teil der zu Beginn als unzuverlässig aussortierten Entfernungspixel in die auszuwertende Tiefenkarte aufgenommen. Damit werden letztlich Objektkonturen rekonstruiert. Das Vorgehen ist nicht etwa eine Interpolation von Entfernungswerten. Es werden im Gegenteil die tatsächlichen Messwerte für die Entfernungspixel verwendet, wenn deren Qualität während der Bereichserweiterung nach erneuter Bewertung als hinreichend angesehen wird.

Die Erfindung hat den Vorteil, dass die Trennleistung in zuverlässige und unzuverlässige Entfernungspixel der Tiefenkarte unter Beibehaltung eines hohen Füllgrades der Tiefenkarte erheblich verbessert wird. Messfehler werden dabei vollständig oder zumindest weitgehend aus der Tiefenkarte entfernt. Messfehler sind gerade in sicherheitstechnischen Anwendungen hochkritisch, da sie zu eine Fehlabschaltung oder, wesentlich schwerwiegender, dem Ausbleiben einer notwendigen Abschaltung und damit Verletzungen von Bedienpersonal führen können. Bereits ein einziger zuverlässiger Entfernungspixel in einem Objekt genügt häufig, das gesamte Objekt während der Bereichserweiterung zu rekonstruieren. Dies gilt zumindest dann, wenn Objekte erkannt werden sollen, die in etwa die Größe des Korrelationsfensters des Stereoalgorithmus' haben.

Erfindungsgemäß werden also Qualitätsinformationen benachbarter Entfernungspixel verwendet, um die Tiefenkarte weiter mit zuverlässigen Entfernungspixeln zu füllen. Diese Verlässlichkeits- oder Qualitätsinformationen sind bevorzugt in einer Qualitätskarte mit je einem Eintrag oder Vektor für jeden Entfernungspixel abgelegt, so dass eine in ihren Hauptdimensionen der Tiefenkarte entsprechende Matrix vorliegt, die an den Koordinaten jedes Entfernungspixels zugehörige Qualitätsmerkmale hält.

Die Qualitätsinformationen liegen bevorzugt für sämtliche Entfernungspixel vor, und entsprechend werden auch sämtliche Entfernungspixel geprüft und auf "zuverlässig" hochgestuft, wenn in der Nachbarschaft des jeweils zu prüfenden Entfernungspixels ein ähnlich weit entfernter zuverlässiger Entfernungspixel zu finden ist. Alternativ kann das erfindungsgemäße Vorgehen auch nur auf einen Teil der Entfernungspixel beschränkt bleiben und auch die Qualitätsinformation nur partiell vorliegen.

Soweit das 3D-System als 3D-Kamera bezeichnet ist, soll dies nicht ausschließen, dass einige oder alle Auswertungen außerhalb eines eigentlichen Kameragehäuses vorgenommen werden, beispielsweise in einem neben einem Gehäuse mit den Bildsensoren angeordneten Rechner. Weiterhin sind die Namen "zuverlässig", "unzuverlässig" und "ungültig" der Zustände lediglich zum leichteren Verständnis gewählt. Sie sind beliebig austauschbar und in der Praxis ohnehin bevorzugt nur als Zahl hinterlegt.

Die Bereichserweiterungs-Auswertungseinheit ist bevorzugt für eine Einstellung der Anforderungen an die Qualitätsinformationen und insbesondere dafür ausgebildet, bei der Zuweisung der anfänglichen Zustände so hohe Anforderungen an die Qualitätsinformationen zu stellen, dass nur ein geringer Anteil der Entfernungspixel den Zustand "zuverlässig" erhält. Indem die Kriterien für die anfänglichen Zustände einstellbar sind, ergibt sich die Möglichkeit, je nach Anforderungen der Anwendung unterschiedlich strenge Vorgaben an ein "zuverlässiges" Entfernungspixel zu verwenden. Eine Sicherheitsanwendung hat strengere Vorgaben als beispielsweise eine Assistenz für eine persönliche Videoüberwachung, die jedes potentielle Objekt erkennen soll und dafür auch Fehlmessungen zulässt, die dann durch die Überwachungsperson erkannt werden.

Wenn die Anforderungen besonders streng sind und somit nur ein geringer, bevorzugt ebenfalls einstellbarer Anteil an "zuverlässigen" Entfernungspixeln übrig bleibt, ist meist das Ziel, möglichst alle Messfehler aus der Tiefenkarte zu eliminieren, oder in der Sprache der Statistik so viele "false positives" wie möglich auszuschließen. Es wird dabei eine ganz erhebliche Erhöhung der "false negatives" in Kauf genommen, also die Einstufung von an sich nutzbaren Entfernungspixeln als "unzuverlässig". Der Zusammenhang ist üblicherweise nichtlinear, weshalb eine Verringerung von "false positives" nur durch eine überproportionale Erhöhung der "false negatives" erreicht werden kann. Die Tiefenkarte ist deshalb zunächst nur spärlich besetzt mit weniger als 50%, 30%, 10%, 1-5% oder sogar weniger als 1% der Entfernungspixel im Zustand "zuverlässig". Diese verbleibenden Entfernungspixel sind dafür tatsächlich hochgradig "zuverlässig" und enthalten so gut wie keine Messfehler mehr. Auf den ersten Blick mag es sinnvoller erscheinen, einen Ausgleich zwischen den beiden genannten statistischen Fehlerarten zu suchen und die Tiefenkarte von Anfang an möglichst dicht zu besetzen. Erst die beschriebene Ausführungsform vermeidet aber die später schwer zu erkennenden Messfehler, und die Besetzung der Tiefenkarte mit "zuverlässigen" Entfernungspixeln wird durch die Bereichserweiterung wieder aufgefüllt.

Die Stereoskopie-Auswertungseinheit ist bevorzugt dafür ausgebildet, Qualitätsinformationen mindestens auf eine der folgenden Arten zu gewinnen:
- als Korrelationsmaß zur Bewertung der Ähnlichkeit von Strukturen im ersten und zweiten Bild, die der Disparitätsschätzung für die Entfernungsberechnung des Entfernungspixels in der Stereoskopie-Auswertungseinheit zugrunde liegen,
- mittels einer Texturbewertung von Ausschnitten der Bilder,
- mittels einer Nebenmaximabewertung, mit der entschieden wird, ob ein der Disparitätsschätzung zugrunde gelegtes Korrelationsmaximum hinreichend ausgeprägt ist,
- mittels eines Rechts-Links-Tests, welcher Entfernungswerte bei Korrelation des ersten Bildes mit dem zweiten Bild mit Entfernungswerten bei Korrelation des zweiten Bildes mit dem ersten Bild vergleicht.

Diese Verfahren werden unten in der Figurenbeschreibung näher erläutert. Ergänzend wird erneut auf die in der Einleitung zitierte Arbeit von Scharstein und Szeliski verwiesen. Qualitätsinformationen sind zunächst ganz allgemein zu verstehen und umfassen jegliche Bewertung der Qualität der einem Entfernungspixel zugehörigen Entfernung. Sie bestehen im einfachsten Fall aus einem Korrelationswert zu jedem Entfernungspixel. Beispielhaft genannte Korrelationsmaße sind SAD (Sum of Absolute Differences), SSD (Sum of Squared Differences), NCC (Normalized Cross Correlation) und nahezu beliebige andere Kostenfunktionen. Bevorzugt sind noch weitere Qualitätsinformationen zu den Entfernungspixeln hinterlegt, beispielsweise ein Vektor mit je einem Eintrag zu dem Ergebnis jeder angewandten Bewertung beziehungsweise jedes angewandten Filters. Die Qualitätskarte weist dann also an jeder einem Entfernungspixel in der Tiefenkarte entsprechenden Position eine Bewertungszahl oder einen Bewertungsvektor auf.

Mit Begriffen wie Korrelationsmaximum soll immer auch ein Korrelationsminimum umfasst sein, da die Frage, ob die beste Korrelation in einem Maximum oder einem Minimum vorliegt, vom Verfahren abhängt, beispielsweise von der verwendeten Kostenfunktion.

Von der Bereichserweiterungs-Auswertungseinheit ist bevorzugt der anfängliche Zustand "zuverlässig" nur zuweisbar, wenn alle Qualitätsinformationen zu einem Entfernungspixel ein Mindestkriterium erfüllen, oder wenn ein zusammenfassendes Skalarprodukt aus einem vorgebbaren Gewichtungsvektor mit den Qualitätsinformationen zu einem Entfernungspixel ein Mindestkriterium erfüllt. Unter den zahlreichen Auswertungsmöglichkeiten des Bewertungsvektors sind damit einige wichtige genannt. In einer Ausführungsform weist der Bewertungsvektor binäre Komponenten auf, und "zuverlässig" ist ein Entfernungspixel, in dem jeder, eine Mindestanzahl oder eine Auswahl von Filtern durch den binären Wert "1" anzeigt, dass aus Sicht des zugehörigen Filters das Entfernungspixel zuverlässig ist. Alternativ weist der Bewertungsvektor Zahlenwerte auf, und es wird ein Skalarprodukt mit einem vorgegebenen oder sogar adaptiven Gewichtungsvektor gebildet, um eine einzelne Maßzahl zu erhalten. Mit einem solchen Skalarprodukt, vor allem wenn der Gewichtungsvektor noch funktionale Abhängigkeiten etwa zur Belichtung, Applikation oder weiteren situativen Elementen aufweist, lassen sich die meisten denkbaren Bewertungen abbilden und sehr schnell und einfach in einen Zustand "zuverlässig" oder "unzuverlässig" überführen.

Die Bereichserweiterungs-Auswertungseinheit ist bevorzugt dafür ausgebildet, die Bereichserweiterung für alle Entfernungspixel in einem einzigen zeilenweisen Durchgang durch die Entfernungspixel in Echtzeit zu berechnen und dabei insbesondere jede Zeile einmal in Leserichtung unter Berücksichtung der drei Nachbar-Entfernungspixel der vorhergehenden Zeile und des direkten Vorgänger-Entfernungspixels in der aktuellen Zeile und einmal gegen die Leserichtung unter Berücksichtigung des direkten Nachfolger-Entfernungspixels zu bearbeiten. Es sind viele andere Verfahren denkbar, die Bereichserweiterung vorzunehmen. Gerade bei Echtzeit- oder Nahe-Echtzeitanwendungen ist aber die Rechenzeit kritisch. Mit dem genannten Verfahren muss die Tiefenkarte lediglich einmal durchgearbeitet werden (one pass). Die zeilenweise Verarbeitung ermöglicht außerdem Integration in ein Echtzeitsystem, bei dem die Datenauswertung in einer Pipelinestruktur schon während des Einlesens weiterer Zeilen vorgenommen wird. Natürlich kann auch eine abweichende Nachbarschaftsregel verwendet werden.

Die Bereichserweiterungs-Auswertungseinheit ist bevorzugt dafür ausgebildet, Entfernungspixeln anhand der Qualitätsinformationen den anfänglichen Zustand "ungültig" zuzuweisen, wobei Entfernungspixel mit dem Zustand "ungültig" von der anschließenden Bereichserweiterung ausgeschlossen sind. Die Bewertungsgrundlage kann eine einfach eine gegenüber dem Zustand "unzuverlässig" strengere Schwelle sein. Die Alternative ist eine eigene Bewertung, die analog der Differenzierung zwischen "unzuverlässig"/"zuverlässig" beispielsweise ein Skalarprodukt mit einem Gewichtungsvektor bildet. Denkbar ist schließlich, bestimmte Filter als essentiell zu betrachten. Sieht ein essentieller Filter den Entfernungspixel "unzuverlässig", so wird er unabhängig von den weiteren Qualitätsinformationen als "ungültig" eingestuft. Die Bereichserweiterung stuft "ungültige" Entfernungspixel unter keinen Umständen wieder als "zuverlässig" ein. Bei einem "ungültigen" Entfernungspixel ist die Qualität so schlecht, dass eine den Nachbarn ähnliche Entfernung als zufallsbedingt angesehen werden muss. Obwohl nach dieser Ausführungsform die Zustände "unzuverlässig" und "ungültig" scharf digital voneinander getrennt werden, ist alternativ auch ein kontinuierlicher Übergang vorstellbar. Der Bereichserweiterung wird dann je nach Maßzahl auf der Skala zwischen nur "unzuverlässig" oder unrettbar "ungültig" das nachträgliche Umstufen auf "zuverlässig" erleichtert oder erschwert.

Die Bereichserweiterungs-Auswertungseinheit ist bevorzugt dafür ausgebildet, Entfernungspixeln außerhalb eines Arbeitsbereichs der 3D-Kamera den anfänglichen Zustand "unzuverlässig" oder "ungültig" zuzuordnen. Ist beispielsweise die 3D-Kamera in einer Vogelperspektive montiert, so muss notwendig jede die Entfernung bis zum Boden übersteigende Messung fehlerhaft sein. Ähnliches gilt für sehr nahe Entfernungen, die zum einen besonders häufig Messartefakte darstellen, zum anderen auch wegen ihrer Lage außerhalb des Arbeitsbereichs, also des eigentlich zu überwachenden Teilbereichs des Sichtfeldes der Kameras, nicht interessieren. So werden eine Reihe von Messartefakten mit einem sehr einfachen Kriterium erfasst.

In Weiterbildung der Erfindung ist bevorzugt eine Nachbearbeitungseinheit vorgesehen, welche für eine Prüfung der Tiefenkarte daraufhin ausgelegt ist, ob die Besetzung mit "zuverlässigen" Entfernungspixeln für nachgeordnete Auswertungen hinreichend dicht ist. Trotz Bereichserweiterung treten manchmal kritische Lücken in der Tiefenkarte auf. In solchen Lücken, in denen das System keine zuverlässige Tiefeninformation erfasst hat, bleiben möglicherweise Objekte unerkannt. Die Überwachungs-, erst recht eine Sicherheitsfunktion ist dann nicht mehr gewährleistet.

In bevorzugter Anwendung in der Sicherheitstechnik ist eine Schutzbereichsverletzungs-Auswertungseinheit für eine Auswertung der Tiefenkarte auf Objekte oder unzulässige Eingriffe in vordefinierte Schutzbereiche des Überwachungsbereichs ausgebildet, wobei weiterhin ein Abschaltausgang vorgesehen ist, über welchen durch die Schutzbereichs-Auswertungseinheit ein sicherheitsgerichteter Abschaltbefehl an eine gefährliche Maschine ausgebbar ist, sobald ein unzulässiger Eingriff erkannt ist. Ein weiterer Anlass für eine Abschaltung ist eine nicht dicht genug besetzte Tiefenkarte mit sicherheitskritischen Lücken, wie von der Nachbearbeitungseinheit erkannt.

Vorteilhafterweise ist mindestens ein FPGA vorgesehen, auf dem die Stereoskopie-Auswertungseinheit, die Bereichserweiterungs-Auswertungseinheit, die Nachbearbeitungseinheit und/oder die Schutzbereichsverletzungs-Auswertungseinheit implementiert ist. FPGAs (Field Programmable Gate Arrays) sind verhältnismäßig kostengünstig und sehr flexibel für eine schnelle Implementierung der sehr anspruchsvollen und rechenzeitintensiven Auswertung anpassbar, auch und gerade im Verbund einer Mehrzahl von FPGAs mit Parallel- und Pipelineverarbeitung. Einzelne FPGAs des Verbundes oder sogar Bereiche des FPGAs können auch unterschiedlich getaktet werden, damit in einer Pipelinestruktur mit mehreren aufeinanderfolgenden Verarbeitungsschritten alle Bildzeilen miteinander synchronisiert bleiben. Ein Beispiel für eine Frequenzanpassung ist, wenn bei Bereichserweiterung in einem einzigen zeilenweisen Durchgang wie oben beschrieben die Bereichserweiterung unter verdoppelter Bearbeitungsfrequenz gegenüber dem Einlesen der Zeilen aus den Bildsensoren abläuft. Natürlich sind grundsätzlich auch andere digitale Logikbausteine geeignet, also ASIC (Application Specific Integrated Circuit), DSP (Digital Signal Processor), PLD (Programmable Logic Device) und ganz allgemeinen Mikroprozessoren. Die Aufteilung in die verschiedenen genannten Auswertungseinheiten dient dabei in erster Linie der Anschauung, es können sowohl mehrere oder alle dieser Einheiten auf demselben Logikbaustein implementiert sein als auch umgekehrt mehrere Logikbausteine zusammen nur eine dieser Einheiten bilden, und auch Mischformen sind denkbar.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische räumliche Gesamtdarstellung einer 3D-Sicherheits- kamera;
- Fig. 2: ein vereinfachtes Ablaufdiagramm einer Überwachung auf Schutzbereichs- verletzungen durch eine erfindungsgemäße 3D-Sicherheitskamera;
- Fig. 3a: eine Schemadarstellung eines Überwachungsbereichs mit einer Szenerie aus dreidimensionalen Beispielobjekten;
- Fig. 3b: eine beispielhafte Darstellung derjenigen Entfernungspixel der Szenerie, die von dem Stereoskopiealgorithmus bei Anwendung ausgeglichener Qualitätsanforderungen von Anfang an zuverlässig bestimmt werden;
- Fig. 3c: eine Darstellung gemäß Figur 3b mit wesentlich verschärften Qualitätsan- forderungen;
- Fig. 3d: eine Darstellung gemäß Figur 3b, nachdem eine erfindungsgemäße Be- reichserweiterung vorgenommen wurde;
- Fig. 4: ein vereinfachtes Ablaufdiagramm einer erfindungsgemäßen Implementie- rung des Bereichserweiterungsschritts aus dem Ablaufdiagramm gemäß Figur 2; und
- Figur 5: eine schematische Darstellung einer Tiefenkarte zur Erläuterung des Be- reichserweiterungsschritts gemäß Figur 4.

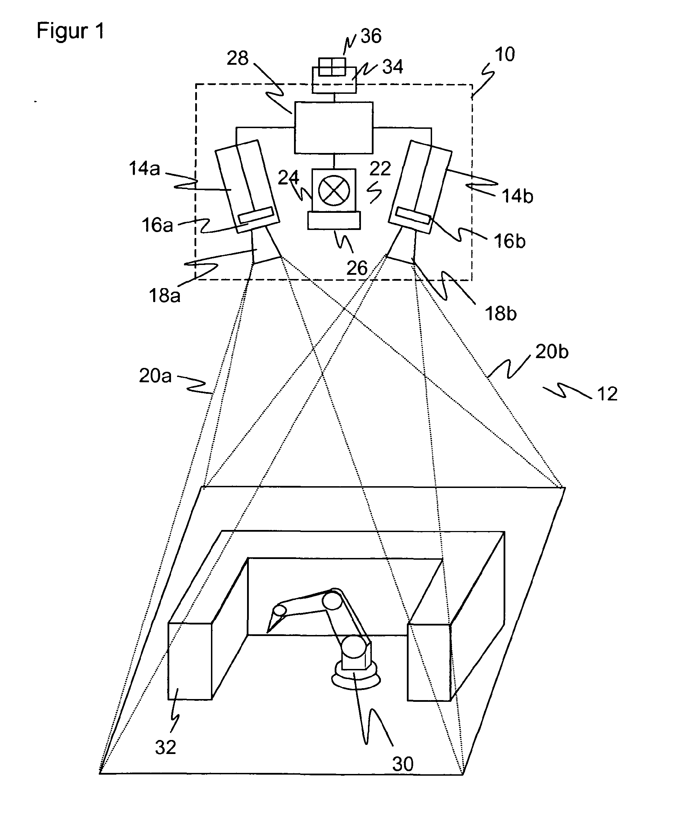

Figur 1 zeigt in einer schematischen dreidimensionalen Darstellung den allgemeinen Aufbau einer erfindungsgemäßen 3D-Sicherheitskamera 10 nach dem Stereoskopieprinzip, die zur sicherheitstechnischen Überwachung eines Raumbereichs 12 eingesetzt ist. Die erfindungsgemäße Bereichserweiterung lässt sich auch für Tiefenkarten einsetzen, die mit einem anderen bildgebenden Verfahren als Stereoskopie gewonnen werden. Ebenso ist der Einsatz der Erfindung nicht auf die Sicherheitstechnik beschränkt, da nahezu jede auf 3D-Bildern basierende Anwendung von zuverlässigeren Tiefenkarten profitiert. Mit dieser Vorbemerkung des weiteren Anwendungsbereichs wird im Folgenden nur noch das Beispiel einer stereoskopischen 3D-Sicherheitskamera 10 detailliert beschrieben.

Zwei Kameramodule 14a, 14b sind in einem bekannten festen Abstand zueinander montiert und nehmen jeweils Bilder des Raumbereichs 12 auf. In jeder Kamera ist ein Bildsensor 16a, 16b vorgesehen, üblicherweise ein matrixförmiger Aufnahmechip, der ein rechteckiges Pixelbild aufnimmt, beispielsweise ein CCD- oder ein CMOS-Sensor. Den Bildsensoren 16a, 16b ist je ein Objektiv 18a, 18b mit einer abbildenden Optik zugeordnet, welche in der Praxis als jedes bekannte Abbildungsobjektiv realisiert sein können. Der Sichtwinkel dieser Optiken ist in Figur 1 durch gestrichelte Linien dargestellt, die jeweils eine Sichtpyramide 20a, 20b bilden.

In der Mitte zwischen den beiden Bildsensoren 16a, 16b ist eine Beleuchtungseinheit 22 vorgesehen, wobei diese räumliche Anordnung nur als Beispiel zu verstehen ist und die Beleuchtungseinheit ebenso asymmetrisch oder sogar außerhalb der 3D-Sicherheitskamera 10 angeordnet sein kann. Diese Beleuchtungseinheit 22 weist eine Lichtquelle 24, beispielsweise einen oder mehrere Laser oder LED, sowie ein Mustererzeugungselement 26 auf, das beispielsweise als Maske, Phasenplatte oder diffraktives optisches Element ausgebildet ist. Somit ist die Beleuchtungseinheit 22 in der Lage, den Raumbereich 12 mit einem strukturierten Muster auszuleuchten. Alternativ ist keine oder eine homogene Beleuchtung vorgesehen, um die natürlichen Objektstrukturen im Raumbereich 12 auszuwerten. Auch Mischformen mit verschiedenen Beleuchtungsszenarien sind denkbar.

Mit den beiden Bildsensoren 16a, 16b und der Beleuchtungseinheit 22 ist eine Steuerung 28 verbunden. Mittels der Steuerung 28 wird das strukturierte Beleuchtungsmuster erzeugt und bei Bedarf in seiner Struktur oder Intensität variiert, und die Steuerung 28 empfängt Bilddaten der Bildsensoren 16a, 16b. Aus diesen Bilddaten berechnet die Steuerung 28 mit Hilfe einer stereoskopischen Disparitätsschätzung dreidimensionale Bilddaten (Entfernungsbild, Tiefenkarte) des Raumbereichs 12. Das strukturierte Beleuchtungsmuster sorgt dabei für einen guten Kontrast und eine eindeutig zuordenbare Struktur jedes Bildelements in dem beleuchteten Raumbereich 12. Es ist selbstunähnlich, wobei der wichtigste Aspekt der Selbstunähnlichkeit das zumindest lokale, besser globale Fehlen von Translationssymmetrien vor allem in Korrelationsrichtung des Stereoalgorithmus' ist, so dass keine scheinbaren Verschiebungen von Bildelementen in den jeweils aus unterschiedlicher Perspektive aufgenommenen Bildern aufgrund gleicher Beleuchtungsmusterelemente erkannt werden, welche Fehler in der Disparitätsschätzung verursachen würden.

Mit zwei Bildsensoren 16a, 16b tritt dabei ein bekanntes Problem auf, dass Strukturen längs der Epipolarlinie nicht für die Disparitätsschätzung herangezogen werden können, weil hier das System nicht lokal unterscheiden kann, ob die Struktur in den beiden Bildern aufgrund der Perspektive gegeneinander verschoben aufgenommen oder ob lediglich ein ununterscheidbarer anderer Teil derselben, parallel zur Basis des Stereosystems ausgerichteten Struktur verglichen wird. Um dies zu lösen, können in anderen Ausführungsformen ein oder mehrere weitere Kameramodule eingesetzt werden, welche gegenüber der Verbindungsgeraden der ursprünglichen beiden Kameramodule 14a, 14b versetzt angeordnet sind.

Im von dem Sicherheitssensor 10 überwachten Raumbereich 12 können sich bekannte und unerwartete Objekte befinden. Dabei kann es sich beispielsweise wie dargestellt um einen Roboterarm 30, aber auch eine sonstige Maschine, eine Bedienperson und anderes handeln. Der Raumbereich 12 bietet Zugang zu einer Gefahrenquelle, sei es weil es ein Zugangsbereich ist oder weil sich eine gefährliche Maschine 30 in dem Raumbereich 12 selbst befindet. Um diese Gefahrenquelle abzusichern, können ein oder mehrere virtuelle Schutz- und Warnfelder 32 konfiguriert werden. Sie bilden einen virtuellen Zaun um die gefährliche Maschine 30. Aufgrund der dreidimensionalen Auswertung ist es möglich, Schutz- und Warnfelder 32 dreidimensional zu definieren, so dass eine große Flexibilität entsteht.

Die Steuerung 28 wertet die dreidimensionalen Bilddaten auf unzulässige Eingriffe aus. Die Auswertungsregeln können beispielsweise vorschreiben, dass in Schutzfeldern 32 überhaupt kein Objekt vorhanden sein darf. Flexiblere Auswertungsregeln sehen vor, zwischen erlaubten und nicht erlaubten Objekten zu differenzieren, etwa anhand von Bewegungsbahnen, Mustern oder Konturen, Geschwindigkeiten oder allgemeinen Arbeitsabläufen, die sowohl vorab als erlaubt eingelernt als auch anhand von Bewertungen, Heuristiken oder Klassifikationen noch während des Betriebs eingeschätzt werden.

Erkennt die Steuerung 28 einen unzulässigen Eingriff in ein Schutzfeld, so wird über eine Warn- oder Abschalteinrichtung 34, die wiederum in die Steuerung 28 integriert sein kann, eine Warnung ausgegeben oder die Gefahrenquelle abgesichert, beispielsweise der Roboterarm 30 angehalten. Sicherheitsrelevante Signale, also vor allem das Abschaltsignal, werden über einen Sicherheitsausgang 36 ausgegeben (OSSD, Output Signal Switching Device). Dabei hängt es von der Anwendung ab, ob eine Warnung genügt, beziehungsweise es ist eine zweistufige Absicherung vorgesehen, bei der zunächst gewarnt und erst bei fortgesetztem Objekteingriff oder noch tieferem Eindringen abgeschaltet wird. Statt einer Abschaltung kann die angemessene Reaktion auch das sofortige Verbringen in eine ungefährliche Parkposition sein.

Um für sicherheitstechnische Anwendungen geeignet zu sein, ist die 3D-Sicherheitskamera 10 fehlersicher ausgelegt. Dies bedeutet unter anderem, dass die 3D-Sicherheitskamera 10 sich selber, auch in Zyklen unterhalb der geforderten Ansprechzeit, testen kann, insbesondere auch Defekte der Beleuchtungseinheit 22 erkennt und somit sicherstellt, dass das Beleuchtungsmuster in einer erwarteten Mindestintensität verfügbar ist, und dass der Sicherheitsausgang 36 sowie die Warn- oder Abschalteinrichtung 34 sicher, beispielsweise zweikanalig ausgelegt sind. Ebenso ist auch die Steuerung 28 selbstsicher, wertet also zweikanalig aus oder verwendet Algorithmen, die sich selbst prüfen können. Derartige Vorschriften sind für allgemeine berührungslos wirkende Schutzeinrichtungen in der EN 61496-1 bzw. der IEC 61496 normiert sowie in der DIN EN ISO 13849 und EN 61508 normiert. Eine entsprechende Norm für Sicherheitskameras befindet sich in der Vorbereitung.

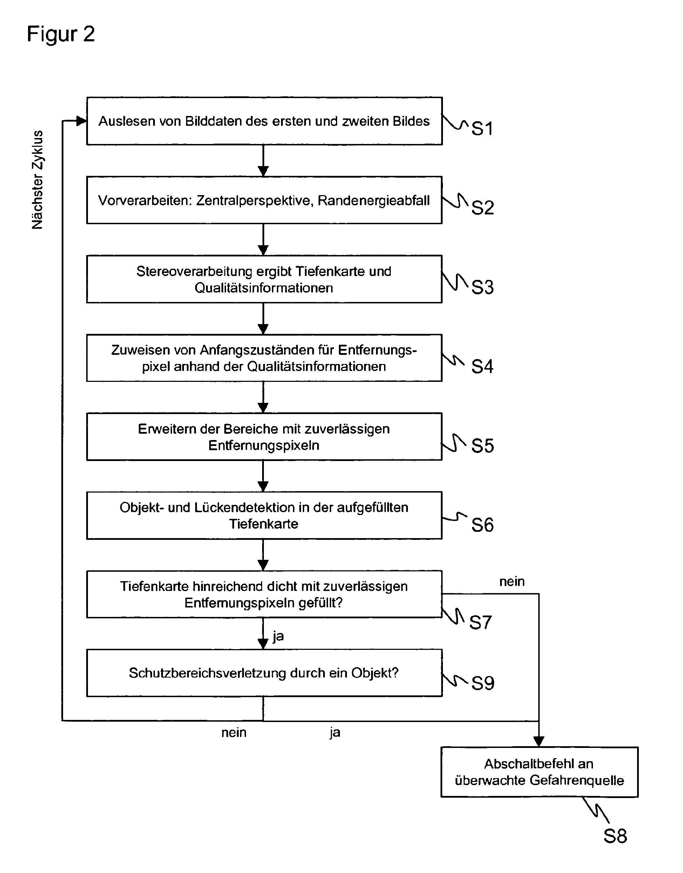

Figur 2 zeigt ein vereinfachtes Ablaufdiagramm der Überwachung mittels der 3D-Sicherheitskamera 10. Jede vollständige Auswertung einer Tiefenkarte wird hier als Zyklus bezeichnet. In praktischen sicherheitstechnischen Anwendungen werden mehrere Zyklen innerhalb einer Ansprechperiode benötigt, beispielsweise für Selbsttests der Bildsensoren oder um verschiedene Beleuchtungsszenarien auszuwerten. Um die Rechenkapazitäten optimal zu nutzen, wird bevorzugt nicht zuerst ein komplettes Bild eingelesen, sondern die Auswertung beginnt bereits, sobald die erste oder die ersten Bildzeilen vorliegen. In einer Pipelinestruktur werden die von einem jeden Zwischenschritt bearbeiteten Zeilen an einen nachgeordneten Schritt weitergegeben. Somit befinden sich zu einem gegebenen Zeitpunkt zahlreiche Bildzeilen in unterschiedlichen Bearbeitungsstufen. Die Zwischenschritte der Pipeline können, müssen aber nicht mit den Schritten der Figur 2 übereinstimmen.

In einem ersten Schritt S1 des Ablaufdiagramms gemäß Figur 2 werden Bilddaten aus den beiden unterschiedlichen Perspektiven des ersten und zweiten Bildsensors 16a, 16b ausgelesen. Diese Bilddaten werden zunächst einzeln in einem zweiten Schritt S2 einer Vorverarbeitung unterzogen. Dabei werden verbleibende Abweichungen von der geforderten Zentralperspektive entzerrt, welche die Objektive 18a, 18b aufgrund von nicht idealen optischen Eigenschaften einführen. Anschaulich gesprochen soll ein Schachbrett mit hellen und dunklen Quadraten als solches abgebildet werden, und Abweichungen davon werden mittels eines Modells der Optik, durch Konfiguration oder durch vorheriges Einlernen in dem Vorverarbeitungsschritt S2 digital ausgeglichen. Ein weiteres bekanntes Beispiel für Vorverarbeitung ist ein Randenergieabfall, der durch Anheben der Helligkeit an den Rändern kompensierbar ist.

Auf den vorverarbeiteten Einzelbildern arbeitet dann in einem dritten Schritt S3 der eigentliche Stereoalgorithmus. Strukturen des einen Bildes werden mit unterschiedlichem Translationsversatz mit Strukturen des anderen Bildes korreliert, und der Versatz mit der besten Korrelation zur Disparitätsschätzung verwendet. Welche Norm die Korrelation bewertet ist dabei nicht von prinzipieller Bedeutung, auch wenn die Leistungsfähigkeit des Stereoskopiealgorithmus' bei bestimmten Normen besonders hoch ist. Die Korrelation liefert nicht nur eine Disparitätsschätzung, aus der mit elementaren trigonometrischen Überlegungen unter Einbeziehung des Abstands der Kameras 14a, 14b ein Entfernungspixel für die Tiefenkarte resultiert, sondern zugleich ein Gütemaß für die Korrelation. Beispiele für das Gütemaß sind einleitend genannt.

Das Gütemaß allein ist erfindungsgemäß bevorzugt nur ein Teil der Qualitätsinformationen. Es werden weitere Filter nachgeschaltet, die jeweils der Qualitätsinformation eine weitere Dimension hinzufügen. Zahlreiche in der Stereoskopie nützliche Filter sind bekannt, von denen beispielhaft drei kurz erläutert werden. Die Erfindung ist nicht auf eine bestimmte Auswahl derartiger Filter beschränkt.

Ein Texturfilter bewertet die Grauwerte der Tiefenkarte. Grundsätzlich können die Bildsensoren 16a, 16b aber auch Farbwerte liefern. Eine mögliche Implementierung des Texturfilters sieht vor, den Grauwert des zu prüfenden Entfernungspixels mit Grauwerten benachbarter Pixel zu vergleichen. Finden sich dort nicht zumindest n Entfernungspixel, deren Grauwerte sich nicht um mindestens den Wert m unterscheidet, so ist die Texturqualität unzureichend. Selbstverständlich muss die Bewertung nicht notwendig binär sein. Das ist nur eine von zahlreichen Näherungen an die Bewertung der Autokorrelation, die zwar ein besonders geeignetes Maß darstellt, aber ohne vereinfachende Umsetzung sehr rechenintensiv wäre.

Zwar erkennt der Texturfilter, ob überhaupt Struktur vorhanden ist, nicht aber, ob diese auch eindeutige Korrelationen zulässt. Ein Gegenbeispiel wäre ein Streifenmuster, welches zahlreiche gleichwertige Korrelationsmaxima erzeugt. Deshalb ist als weiterer Filter ein Filter für die Eindeutigkeit des Korrelationsmaximums vorgesehen (correlation uniqueness measure), der hier als Nebenmaximabewertung bezeichnet wird. Damit wird bewertet, ob das gefundene Korrelationsmaximum hinreichend ausgeprägt ist. Beispielsweise kann man fordern, dass das zweithöchste Korrelationsmaximum nicht mehr als einen bestimmten Anteil, wie etwa 80%, des besten Korrelationsmaximums betragen darf. Mit diesem Filter werden Situationen mit mehrdeutigen Korrelationen erkannt.

Ein dritter Links-Rechts-Filter dient in erster Linie der Bewertung von Okklusionen, also Bildmerkmalen, die aus der Perspektive der einen Kamera 14a, 14b gesehen werden, aus der Perspektive der anderen Kamera 14b, 14a aber nicht. Dazu wird der Stereoalgorithmus ein zweites Mal auf die gegeneinander vertauschten ersten und zweiten Bilder angewandt. Nur wenn die Entfernungsschätzung in beiden Durchgängen dasselbe Ergebnis liefert, ist sie aus Sicht des Links-Rechts-Filters zuverlässig.

Die so in Form von mehrdimensionalen Bewertungsvektoren gewonnnen Qualitätsinformationen werden in einem vierten Schritt S4 genutzt, um jedem Entfernungspixel einen Anfangszustand "zuverlässig" oder "unzuverlässig" zuzuordnen. In der bevorzugten Ausführungsform muss jeder Filter eine binäre Entscheidung treffen, und sämtliche Filter müssen sich über die Zuverlässigkeit einig sein, ansonsten ist der Anfangszustand "unzuverlässig". Andere Kriterien und unterschiedliche Gewichtungsfaktoren für die Filter bei der Entscheidung sind selbstverständlich möglich.

Besonders schlecht bewertete Entfernungspixel erhalten sogar den Anfangszustand "ungültig". Die Filter lassen für "ungültige" Entfernungspixel keinerlei nützliche Messinformation mehr erwarten. Entfernungen außerhalb des Arbeitsbereiches der 3D-Sicherheitskamera 10 erhalten unabhängig von den Filteraussagen höchstens den Zustand "unzuverlässig". Es ist durch Vorwissen klar, dass sie falsch oder zumindest nicht relevant sind.

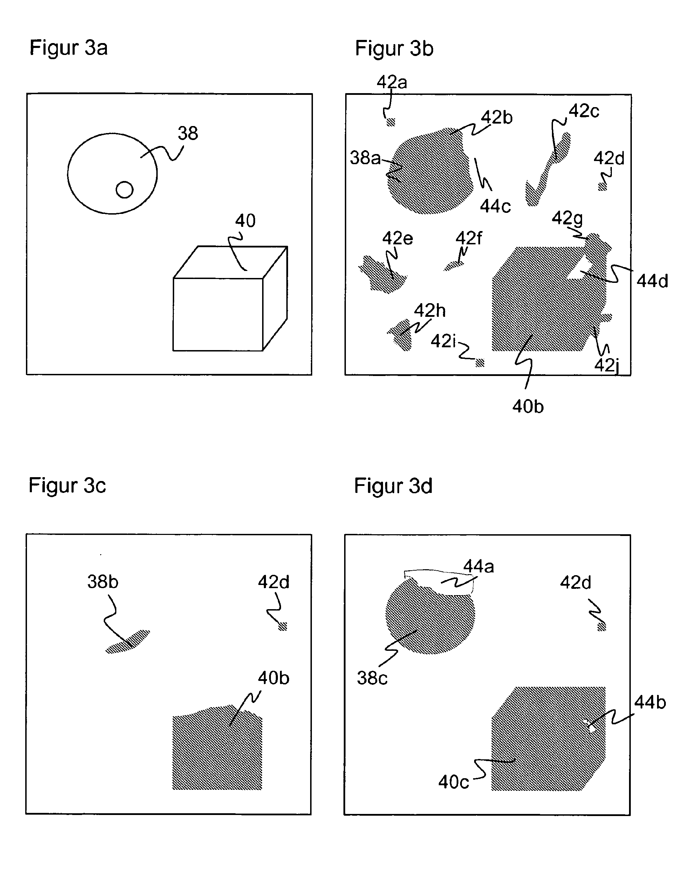

In einem fünften Schritt S5 wird versucht, Bereiche mit "zuverlässigen" Entfernungspixeln zu erweitern. Dazu wird für jeden "unzuverlässigen" Entfernungspixel geprüft, ob sich in seiner Nachbarschaft "zuverlässige" Entfernungspixel finden, die sich in ihrer Entfernung nur geringfügig unterscheiden. Ist das der Fall, so wird der überprüfte "unzuverlässige" Entfernungspixel auf "zuverlässig" hochgestuft. Letztlich ist die Nachbarschaft zu ähnlich weit entfernten, zuverlässig gemessenen Entfernungspixeln also ein weiterer Filter, der die vorhergehenden Filter überstimmt. Die gerade noch zulässigen Entfernungsunterschiede, die auch als Tiefensprungschwelle bezeichnet werden, können absolut oder relativ, sogar ortsabhängig und adaptiv sein. Die für die Erfindung zentrale Bereichserweiterung wird weiter unten anhand der Figuren 3 bis 5 noch näher erläutert.

In einem sechsten Schritt S6 wird die durch die Bereichserweiterung des Schrittes S5 aufgefüllte Tiefenkarte auf Objekte und Lücken bewertet. Objekte sind, sehr vereinfacht gesprochen, zusammenhängende Bereiche mit "zuverlässigen" Entfernungspixeln. Lücken sind alle Teilbereiche mit "unzuverlässigen" und "ungültigen" Entfernungspixeln.

In einem siebten Schritt S7 wird geprüft, ob die Tiefenkarte hinreichend dicht mit "zuverlässigen" Entfernungspixeln gefüllt ist. Eine Lücke darf allenfalls so groß sein, dass auch nach Projektion in maximale Entfernung des Arbeitsbereichs kein sicherheitskritisches Objekt in der Lücke verborgen bliebe. Werden kritische Lücken gefunden, so wird in einem achten Schritt S8 ein Abschaltbefehl an eine überwachte Maschine 30 ausgegeben.

Eine hinreichend dichte Tiefenkarte wird in einem neunten Schritt S9 auf Schutzbereichsverletzungen geprüft. Dazu werden, erneut sehr vereinfacht gesprochen, die im Schritt S6 identifizierten Objekte mit den Schutzbereichen 32 verglichen und, wenn sich ein Objekt in einem Schutzbereich 32 befindet, der Abschaltbefehl S8 gegeben. Nicht jede Schutzbereichsverletzung muss sofort zur Abschaltung führen, es gibt auch zulässige Objekte wie einen Arbeitstisch und zulässige Objektbewegungen wie das Durchfahren einer Palette. Einige derartige Ausnahmen sind als "muting" und "blanking" für berührungslos wirkende Schutzeinrichtungen bekannt.

Wird keine Schutzrechtsverletzung erkannt, so wird die Überwachung mit dem ersten Schritt S1 eines neuen Zyklus' fortgesetzt.

Figur 3 illustriert das Prinzip der erfindungsgemäßen Bereichserweiterung näher. Figur 3a zeigt zunächst eine stilisierte zu überwachende Szenerie, in der zur Erläuterung der Grundgedanken als einfache Beispielobjekte eine Kugel 38 und ein Würfel 40 angeordnet sind. Selbstverständlich sind realistische Szenerien wesentlich komplizierter, mit Arbeitsflächen, Maschinen, Personen und weiteren Objekten.

Auf diese Szenerie werden die Schritte S1 bis S3 angewandt, um eine Tiefenkarte und eine Qualitätskarte zu erzeugen. Den Entfernungspixeln der Tiefenkarte wird dann im Schritt S4 auf Basis der Qualitätskarte der Zustand "zuverlässig" oder "unzuverlässig" zugewiesen. Die Figuren 3b bis 3d zeigen jeweils die "zuverlässig" eingestuften Entfernungspixel als graue, die "unzuverlässig" eingestuften Entfernungspixel als weiße Bildpunkte.

Bei einer ausgewogenen Einstellung der Qualitätsschwellen wie in Figur 3b werden im Schritt S4 zwar große Bereiche 38a, 40a der vorhandenen Objekte "zuverlässig" erkannt. Zugleich entstehen aber auch mehrere "zuverlässig" eingestufte Bereiche 42a-j, die ganz offensichtlich Fehlmessungen sind. In realistischen Szenarien weisen nämlich fehlerhaft gemessene Bereiche manchmal eine mittlere oder noch bessere Qualität der Korrelation auf und werden auch durch einigermaßen tolerant eingestellte Filter nicht als Fehlmessung erkannt. Eine einfache Qualitätsschwelle oder ausgewogene Filtereinstellungen, die einen Ausgleich zwischen "false positives" und "false negatives" suchen, sind daher in der Praxis oft weniger geeignet.

Im Gegensatz zu Figur 3b sind in der Darstellung der Figur 3c die Qualitätsanforderungen im Schritt S4 wesentlich höher eingestellt. Dies führt zu einer wesentlichen Verringerung der "zuverlässigen" Entfernungspixel. Von der Kugel 38 verbleibt nur noch ein kleiner Überrest 38b, und auch bei dem Würfel 40 wird nur noch die Vorderfläche 40b und auch diese unvollständig "zuverlässig" erfasst. Dafür sind die meisten Fehlmessbereiche 42a-j verschwunden, nur der Bereich 42d ist verblieben. Um "false positives" möglichst weitgehend auszuschließen, wird eine auch weit überproportionale Erhöhung der "false negatives" in Kauf genommen.

Fast immer treten nämlich falsch gemessene Tiefenwerte in Verbindung mit einem hohen Tiefensprung relativ zu Nachbarschaft auf. Dieser geometrische Effekt wird in der Bereichserweiterung im Schritt S5 herangezogen. Die verbleibenden "zuverlässigen" Bereiche 38b, 40b, 42d werden gleichsam als Kristallisationskeime verwendet. Für jedes Entfernungspixel in den Bereichen 38b, 40b, 42d werden die benachbarten Pixel betrachtet. Ist wenigstens eines davon "zuverlässig" und die Tiefendifferenz hierzu sehr klein, was beispielsweise durch eine maximal zulässige Tiefensprungsschwelle geprüft wird, so wird aus dem zunächst "unzuverlässigen" Entfernungspixel ein "zuverlässiges" Entfernungspixel. Das Verfahren wird vorzugsweise rekursiv fortgesetzt. Heraufgestufte Entfernungspixel können also "unzuverlässigen" Entfernungspixeln in ihrer Nachbarschaft ihrerseits zu einem Herausstufen verhelfen.

Ein beispielhaftes Ergebnis der Bereichserweiterung ist in Figur 3d dargestellt. In dem Bereich 38b der Kugel 38 ist zwar ein Fehlbereich 44a verblieben, der aber weniger als ein Viertel von ihrer Fläche ausmacht und im Vergleich zur Situation in Figur 3c ganz erheblich geschrumpft ist. Im Bereich 40c des Würfels 40 ist nur eine kleine Fehlstelle 44b verblieben. Der Bereich 42d hat sich nicht vergrößert, weil in dessen Nachbarschaft keine Entfernungspixel mit ähnlichen Tiefenwerten zu finden sind. Es ist sofort ersichtlich, dass die Tiefenkarte zu Figur 3d eine zuverlässigere Objekt- und Fehlstellenbewertung zulässt als die Tiefenkarte zu Figur 3b.

Eine Bereichserweiterung ist auch in der Situation zu Figur 3b anwendbar. Dabei werden aber bestenfalls die Fehlbereiche 44c,d gefüllt. Die Fehlmessbereiche 42a-j blieben weitgehend unberührt und könnten bestenfalls nur wachsen. Eine Behandlung von Fehlmessbereichen 42a-j mit einer inversen Bereichserweiterung zu deren Eliminierung, bei der also "zuverlässige" Entfernungspixel anhand einer Bewertung der Nachbarschaft auf "unzuverlässig" herabgestuft werden, ist denkbar, aber ausgesprochen kritisch. Man würde eine von allen Filtern als "zuverlässig" eingestufte Messung von der weiteren Auswertung ausschließen. Dann sind weitere Maßnahmen erforderlich, um einen unerwarteten Eingriff eines Objekts von einer Fehlmessung zu unterscheiden, ohne die Sicherheitsfunktion zu gefährden.

Die Bereiche 38a-c, 40a-c, 42a-k, 44a-b sind selbstverständlich nur beispielhaft zur Erläuterung des Prinzips. Im Idealfall verschwinden sämtliche Fehlbereiche 42a-j, und die Objekte 38, 40 werden bei der Bereichserweiterung vollständig rekonstruiert. In der realen Anwendung wird dieses Ziel je nach Bedingungen, wie Umgebungslicht, Entfernung oder Remissionseigenschaften der Objekte, mehr oder weniger vollständig erreicht.

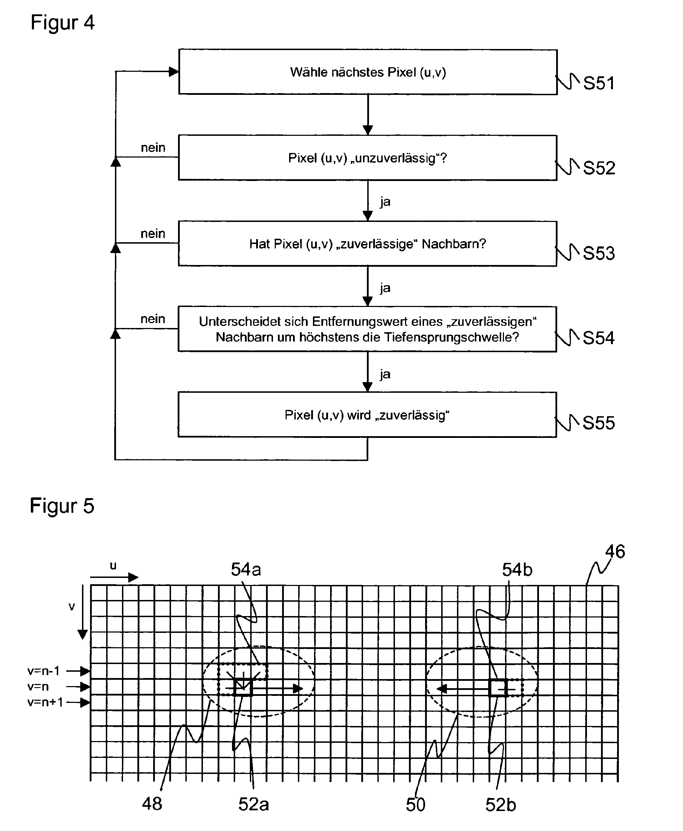

Ein Ablaufdiagramm der Bereichserweiterung im Schritt S5, also der Übergang von Figur 3c auf Figur 3d, wird in Figur 4 mit einem vereinfachten Ablaufdiagramm erläutert. In einem ersten Schritt S51 wird das nächste Entfernungspixel mit den Koordinaten (u,v) in der Tiefenkarte ausgewählt. Die Wahl des nächsten Entfernungspixels beginnt beispielsweise in der linken oberen Ecke und schreitet dann zeilenweise von links nach rechts und von oben nach unten fort.

In einem zweiten Schritt S52 wird geprüft, ob das gewählte Entfernungspixel "unzuverlässig" ist. Andernfalls endet die Überprüfung, es wird also mit dem nächsten Entfernungspixel im Schritt S51 weitergemacht. Das aktuelle Entfernungspixel ist entweder schon "zuverlässig" und bedarf keiner Herausstufung, oder es ist "ungültig" und wird unter keinen Umständen heraufgestuft.

Ist das Entfernungspixel "unzuverlässig", so wird in einem dritten Schritt S53 überprüft, ob eines der benachbarten Entfernungspixel den Zustand "zuverlässig" hat. Nachbarn können beispielsweise die umgebenden vier oder die umgebenden acht Entfernungspixel oder allgemein diejenigen mit einer Maximalentfernung in der 1-Norm oder der 2-Norm sein. Auch ist denkbar, nur Nachbarn in Vorzugsrichtungen zu berücksichtigen. Ausnahmen an den Rändern der Tiefenkarte bleiben in dieser Erläuterung unberücksichtigt. Im einfachsten Fall werden Nachbarn, die wegen Randlage nicht existieren, mit "unzuverlässig" vorbesetzt. Findet sich kein "zuverlässiger" Nachbar, endet die Überprüfung.

In einem vierten Schritt S54 wird geprüft, ob sich der Tiefenwert eines "zuverlässigen" Nachbarentfernungspixels um höchstens eine Tiefensprungschwelle von dem Tiefenwert des geprüften Entfernungspixels unterscheidet. Die Tiefensprungschwelle kann absolut und vorgegeben sein, beispielsweise in der Größenordnung der zu erreichenden Objektauflösung der 3D-Sicherheitskamera 10. Sie kann auch relativ sein, um die Abhängigkeit der Auflösung von der Entfernung zu berücksichtigen. Weitere Möglichkeiten sind ortsabhängige Tiefensprungschwellen, etwa weil in Teilbereichen des Raumbereichs 12 unterschiedlich strenge Anforderungen bestehen. Schließlich ist sogar eine adaptive Tiefensprungschwelle vorstellbar, die also eine funktionelle Abhängigkeit etwa von Umgebungslicht, Arbeitsphase oder anderen Größen aufweist.

Ist die Tiefensprungbedingung erfüllt, so wird das aktuelle Entfernungspixel in einem fünften Schritt S55 auf "zuverlässig" heraufgestuft. Ansonsten bleibt das aktuelle Entfernungspixel "unzuverlässig". Dabei kann zusätzlich noch einmal geprüft werden, wie deutlich die eigenen Qualitätsinformationen des aktuellen Entfernungspixels von den Anforderungen an ein "zuverlässiges" Entfernungspixel abweichen. Auch hiervon könnte der Wert der Tiefensprungschwelle abhängen.

Die Bereichserweiterung wird dann mit dem nächsten Entfernungspixel im Schritt S51 fortgesetzt.

Figur 5 zeigt eine besonders bevorzugte zeilenweise Implementierung der Bereichserweiterung gemäß Figur 4. Das zeilenweise Vorgehen ermöglicht die Integration in die mehrfach angesprochene Echtzeitauswertung durch Pipelines.

Das Raster 46 symbolisiert den Bildspeicher. Dessen Zeile n+1 füllt sich gemäß der Pipelinestruktur zum betrachteten Zeitpunkt nach und nach mit aktuellen Werten für die Tiefenkarte und die Qualitätskarte. Die bereits vorliegende Zeile n wird mit der Bereichserweiterung bearbeitet. Dabei werden die Werte der Zeile n-1 nur gelesen, so dass Zeile n-1 vom nächsten Auswertungsschritt der Pipelinestruktur bereits bearbeitet werden kann.

Die Bereichserweiterung in Zeile n weist einen forward-left-pass 48 von links nach rechts und einen nachfolgenden right-pass 50 von rechts nach links auf. Beide Durchgänge lassen sich mit dem Ablaufdiagramm der Figur 4 erfassen, welches also zweimal nacheinander für alle Entfernungspixel der Zeile in umgekehrter Reihenfolge durchlaufen wird, wobei sich die Nachbarschaftsdefinition in ersten Durchgang von derjenigen im zweiten Durchgang unterscheidet.

Im forward-left-pass werden zu dem überprüften Entfernungspixel 52a bei den Koordinaten (u,v) die Entfernungspixel 52a bei den Koordinaten (u+1, v-1), (u,v-1), (u-1, v-1) und (u-1,v) als Nachbarn 54a definiert. Ist Entfernungspixel 52a "unzuverlässig", einer der Nachbarn 54a "zuverlässig" und unterscheiden sich die Entfernungswerte zu einem "zuverlässigen" Nachbarn 54a um weniger als die Tiefensprungschwelle, so wird der Entfernungspixel 52a "zuverlässig".

Das Vorgehen im nachfolgenden right-pass ist völlig analog bis auf die Tatsache, dass nun zu dem geprüften Entfernungspixel 52b als Nachbar 54b das Entfernungspixel bei den Koordinaten (u+1, v) definiert wird und die Zeile statt von links nach rechts nun von rechts nach links abgearbeitet wird.

Für die Bearbeitung der gesamten Tiefenkarte resultiert ein one-pass-Verfahren, denn zwar werden die Zeilen in zwei Durchgängen bearbeitet, es findet aber nur ein einziger Durchgang durch alle Zeilen statt. Im Unterschied zu bekannten Filteralgorithmen bleiben die Tiefenwerte selbst unverändert, nur der Zustand oder Qualitätsstatus kann geändert werden.

Nach der Bereichserweiterung verbleibende "unzuverlässige" oder gar "ungültige" Entfernungspixel können anschließend auf Null beziehungsweise NIL gesetzt werden, um nachfolgenden Bearbeitungsschritten zu ermöglichen, allein auf der Tiefenkarte unabhängig von Qualitätszuständen zu arbeiten.

Das erfindungsgemäße Vorgehen reproduziert aus wenigstens einem "zuverlässigen" Entfernungspixel Objekte meist fast vollständig, und das Objekt kann nachgeschaltet komfortabel als 3D-Objekt erfasst werden. Ist die Rekonstruktion unvollständig, so verbleibt ein Loch in der Tiefenkarte, dessen Größe aber ebenfalls leicht zu messen und zu bewerten ist. Im Gegensatz zu den herkömmlich entstehenden, von echten Messwerten ununterscheidbaren Messfehlern ist damit die Sicherheitsfunktion gewährleistet und, wenn die Bereichserweiterung zumindest einigermaßen erfolgreich ist, auch eine Verfügbarkeit zu erreichen.

## Patentansprüche

1. Stereoskopische 3D-Kamera (10) mit einem ersten Bildsensor (16a) und einem zweiten Bildsensor (16b) zur Aufnahme eines ersten zweidimensionalen Bildes und eines zweiten zweidimensionalen Bildes eines Überwachungsbereichs (12) aus unterschiedlicher Perspektive, wobei eine Stereoskopie-Auswertungseinheit (28) vorgesehen ist, welche dafür ausgebildet ist, die beiden Bilder zu einer dreidimensionalen Tiefenkarte aus Entfernungspixeln zu verrechnen und Qualitätsinformationen über die ermittelten Entfernungspixel zu erzeugen, wobei eine Bereichserweiterungs-Auswertungseinheit (28) vorgesehen ist, mittels derer den Entfernungspixeln anhand der Qualitätsinformation mindestens die anfänglichen Zustände "zuverlässig" und "unzuverlässig" zuweisbar sind,
**dadurch gekennzeichnet,**
**dass** die Bereichserweiterungs-Auswertungseinheit (28) weiterhin für eine Bereichserweiterung ausgebildet ist, bei der ein Entfernungspixel (52) bei unverändertem Tiefenwert aus dem Zustand "unzuverlässig" in den Zustand "zuverlässig" versetzt wird, wenn in der Nachbarschaft (54) mindestens ein Entfernungspixel im Zustand "zuverlässig" vorhanden ist, dessen Entfernungswert sich um höchstens eine Tiefensprungschwelle unterscheidet.

2. 3D-Kamera (10) nach Anspruch 1,
wobei die Bereichserweiterungs-Auswertungseinheit (28) für eine Einstellung der Anforderungen an die Qualitätsinformationen und insbesondere dafür ausgebildet ist, bei der Zuweisung der anfänglichen Zustände so hohe Anforderungen an die Qualitätsinformationen zu stellen, dass nur ein geringer Anteil der Entfernungspixel den Zustand "zuverlässig" erhält.

3. 3D-Kamera (10) nach einem der vorhergehenden Ansprüche,
wobei die Stereoskopie-Auswertungseinheit (28) dafür ausgebildet ist, Qualitätsinformationen mindestens auf eine der folgenden Arten zu gewinnen:
- als Korrelationsmaß zur Bewertung der Ähnlichkeit von Strukturen im ersten und zweiten Bild, die der Disparitätsschätzung für die Entfernungsberechnung des Entfernungspixels in der Stereoskopie-Auswertungseinheit zugrunde liegen,
- mittels einer Texturbewertung von Ausschnitten der Bilder,
- mittels einer Nebenmaximabewertung, mit der entschieden wird, ob ein der Disparitätsschätzung zugrunde gelegtes Korrelationsmaximum hinreichend ausgeprägt ist,
- mittels eines Rechts-Links-Tests, welcher Entfernungswerte bei Korrelation des ersten Bildes mit dem zweiten Bild mit Entfernungswerten bei Korrelation des zweiten Bildes mit dem ersten Bild vergleicht.

4. 3D-Kamera (10) nach einem der vorhergehenden Ansprüche,
wobei von der Bereichserweiterungs-Auswertungseinheit (28) der anfängliche Zustand "zuverlässig" nur zuweisbar ist, wenn alle Qualitätsinformationen zu einem Entfernungspixel ein Mindestkriterium erfüllen, oder wenn ein zusammenfassendes Skalarprodukt aus einem vorgebbaren Gewichtungsvektor mit den Qualitätsinformationen zu einem Entfernungspixel ein Mindestkriterium erfüllt.

5. 3D-Kamera (10) nach einem der vorhergehenden Ansprüche,
wobei die Bereichserweiterungs-Auswertungseinheit (28) dafür ausgebildet ist, die Bereichserweiterung für alle Entfernungspixel (52) in einem einzigen zeilenweisen Durchgang durch die Entfernungspixel (52) in Echtzeit zu berechnen und dabei insbesondere jede Zeile einmal in Leserichtung unter Berücksichtung der drei Nachbar-Entfernungspixel (54a) der vorhergehenden Zeile und des direkten Vorgänger-Entfernungspixels (54a) in der aktuellen Zeile und einmal gegen die Leserichtung unter Berücksichtigung des direkten Nachfolger-Entfernungspixels (54b) zu bearbeiten.

6. 3D-Kamera (10) nach einem der vorhergehenden Ansprüche,
wobei die Bereichserweiterungs-Auswertungseinheit (28) dafür ausgebildet ist, Entfernungspixeln anhand der Qualitätsinformationen den anfänglichen Zustand "ungültig" zuzuweisen, wobei Entfernungspixel mit dem Zustand "ungültig" von der anschließenden Bereichserweiterung ausgeschlossen sind.

7. 3D-Kamera (10) nach einem der vorhergehenden Ansprüche,
wobei die Bereichserweiterungs-Auswertungseinheit (28) dafür ausgebildet ist, Entfernungspixeln außerhalb eines Arbeitsbereichs der 3D-Kamera (10) den anfänglichen Zustand "unzuverlässig" oder "ungültig" zuzuordnen.

8. 3D-Kamera (10) nach einem der vorhergehenden Ansprüche,
wobei eine Nachbearbeitungseinheit (28) vorgesehen ist, welche für eine Prüfung der Tiefenkarte daraufhin ausgelegt ist, ob die Besetzung mit "zuverlässigen" Entfernungspixeln für nachgeordnete Auswertungen hinreichend dicht ist.

9. 3D-Kamera (10) nach einem der vorhergehenden Ansprüche,
wobei eine Schutzbereichsverletzungs-Auswertungseinheit (28) für eine Auswertung der Tiefenkarte auf Objekte oder unzulässige Eingriffe in vordefinierte Schutzbereiche (32) des Überwachungsbereichs (12) ausgebildet ist, und wobei weiterhin ein Abschaltausgang (36) vorgesehen ist, über welchen durch die Schutzbereichs-Auswertungseinheit (28, 34) ein sicherheitsgerichteter Abschaltbefehl an eine gefährliche Maschine (30) ausgebbar ist, sobald ein unzulässiger Eingriff erkannt ist.

10. 3D-Kamera (10) nach einem der vorhergehenden Ansprüche,
wobei mindestens ein FPGA vorgesehen ist, auf dem die Stereoskopie-Auswertungseinheit, die Bereichserweiterungs-Auswertungseinheit, die Nachbearbeitungseinheit und/oder die Schutzbereichsverletzungs-Auswertungseinheit implementiert ist, und wobei insbesondere bei Bereichserweiterung in einem einzigen zeilenweisen Durchgang gemäß Anspruch 5 die Bereichserweiterung unter verdoppelter Bearbeitungsfrequenz gegenüber dem Einlesen der Zeilen aus den Bildsensoren (16a, 16b) abläuft.

11. Verfahren zur stereoskopischen Erzeugung einer dreidimensionalen Tiefenkarte aus Entfernungspixeln, bei dem ein erstes zweidimensionales Bild und ein zweites zweidimensionales Bild eines Überwachungsbereichs (12) aus unterschiedlicher Perspektive aufgenommen und die beiden Bilder mit einem stereoskopischen Verfahren zu der Tiefenkarte verrechnet und Qualitätsinformationen über die ermittelten Entfernungspixel erzeugt werden, wobei den Entfernungspixeln anhand der Qualitätsinformation ein anfänglicher Zustand zugewiesen wird, wobei die möglichen anfänglichen Zustände mindestens die Zustände "zuverlässig" und "unzuverlässig" aufweisen,
**dadurch gekennzeichnet,**
**dass** eine Bereichserweiterung vorgenommen wird, bei der ein Entfernungspixel (52) bei unverändertem Tiefenwert aus dem Zustand "unzuverlässig" in den Zustand "zuverlässig" versetzt wird, wenn in der Nachbarschaft (54) mindestens ein Entfernungspixel im Zustand "zuverlässig" vorhanden ist, dessen Entfernungswert sich um höchstens eine Tiefensprungschwelle unterscheidet.

12. Verfahren nach Anspruch 11,
wobei die Kriterien für die Zuweisung der anfänglichen Zustände einstellbar sind und insbesondere bei der Zuweisung der anfänglichen Zustände so hohe Anforderungen an die Qualitätsinformationen gestellt werden, dass nur ein geringer Anteil der Entfernungspixel den Zustand "zuverlässig" erhält.

13. Verfahren nach Anspruch 10 oder 11,
wobei die Qualitätsinformationen mindestens auf eine der folgenden Arten gewonnen werden:
- als Korrelationsmaß zur Bewertung der Ähnlichkeit von Strukturen im ersten und zweiten Bild, die der Disparitätsschätzung für die Entfernungsberechnung des Entfernungspixels in der Stereoskopie-Auswertungseinheit zugrunde liegen,
- mittels einer Texturbewertung von Ausschnitten der Bilder ,
- mittels einer Nebenmaximabewertung, mit der entschieden wird, ob ein der Disparitätsschätzung zugrunde gelegtes Korrelationsmaximum hinreichend ausgeprägt ist,
- mittels eines Rechts-Links-Tests, welcher Entfernungswerte bei Korrelation des ersten Bildes mit dem zweiten Bild mit Entfernungswerten bei Korrelation des zweiten Bildes mit dem ersten Bild vergleicht.

14. Verfahren nach einem der Ansprüche 10 bis 13,
wobei die Bereichserweiterung für alle Entfernungspixel (52) in einem einzigen zeilenweisen Durchgang durch die Entfernungspixel (52) in Echtzeit berechnet wird und dabei insbesondere jede Zeile einmal in Leserichtung unter Berücksichtung der drei Nachbar-Entfernungspixel (54a) der vorhergehenden Zeile und des direkten Vorgänger-Entfernungspixels (54a) in der aktuellen Zeile und einmal gegen die Leserichtung unter Berücksichtigung des direkten Nachfolger-Entfernungspixels (54b) bearbeitet wird.

15. Verfahren nach einem der Ansprüche 10 bis 14,
wobei die Tiefenkarte auf Objekte oder unzulässige Eingriffe in vordefinierte Schutzbereiche (32) des Überwachungsbereichs (12) ausgewertet und bei Erkennen eines unzulässigen Eingriffs ein sicherheitsgerichteter Abschaltbefehl an eine gefährliche Maschine (30) ausgegeben wird, und wobei insbesondere vor einer Auswertung auf Objekte und unzulässige Eingriffe geprüft wird, ob die Besetzung der Tiefenkarte mit "zuverlässigen" Entfernungspixeln hinreichend dicht ist.

## Claims

1. A stereoscopic 3D-camera (10) having a first image sensor (16a) and a second image sensor (16b) for recording a first two-dimensional image and a second two-dimensional image of a monitoring area (12) from different perspectives, wherein a stereoscopic evaluation unit (28) is provided which is configured to combine the two images to a three-dimensional depth map with distance pixels and to generate quality information about the determined distance pixels, wherein a region extension evaluation unit (28) is provided to assign the initial states "reliable" and "unreliable" to the distance pixels based on the quality information,
**characterized in that**
the region extension evaluation unit (28) is further configured for a region extension wherein a distance pixel (52) is set from the state "unreliable" to the state "reliable" with unmodified depth value when at least one distance pixel in the state "reliable" is present in the neighbourhood (54) whose distance value differs by at most a depth offset threshold.

2. The 3D-camera (10) according to claim 1,
wherein the region extension evaluation unit (28) is configured for a setting of requirements on the quality information and in particular to place requirements on the quality information during the initial assignment that are so high that only a small fraction of the distance pixels obtains the state "reliable".

3. The 3D-camera (10) according to any of the preceding claims,
wherein the stereoscopic evaluation unit (28) is configured to obtain quality information in at least one of the following ways:
- as a correlation measure for evaluating the similarity of structures in the first and second image which are the basis for the disparity estimation for the distance calculation of the distance pixel in the stereoscopic evaluation unit,
- by a texture evaluation of sections of the images;
- by an evaluation of side maxima by which it is decided whether a correlation maximum whereupon the disparity estimation is based is sufficiently pronounced;
- by a right-left -test which compares distance values from a correlation of the first image and the second image with distance values from a correlation of the second image and the first image.

4. The 3D-camera (10) according to any of the preceding claims,
wherein the initial state "reliable" can only be assigned by the region extension evaluation unit (28) when all quality information of a distance pixel satisfies a minimal criterion, or when a summarizing scalar product of a preset weighting vector with the quality information of a distance pixel satisfies a minimal criterion.

5. The 3D-camera (10) according to any of the preceding claims,
wherein the region extension evaluation unit (28) is configured to calculate the range extension for all distance pixels (52) in real-time in a single pass through the distance pixels (52) and to in particular process each line once in reading direction considering the three neighbouring distance pixels (54a) of the previous line and the direct predecessor distance pixel (54a) in the current line, and once against the reading direction considering the direct succeeding distance pixel (54b).

6. The 3D-camera (10) according to any of the preceding claims,
wherein the region extension evaluation unit (28) is configured to assign the initial state "invalid" to distance pixels based on the quality information, wherein distance pixels in the state "invalid" are excluded from the subsequent region extension.

7. The 3D-camera (10) according to any of the preceding claims,
wherein the region extension evaluation unit (28) is configured to assign the initial state "unreliable" or "invalid" to distance pixels outside a working area of the 3D-camera (10).

8. The 3D-camera (10) according to any of the preceding claims,
wherein a post-processing unit (28) is provided which is configured for a test of the depth map whether it is filled sufficiently dense with "reliable" distance pixels for subsequent evaluations.

9. The 3D-camera (10) according to any of the preceding claims,
wherein a protected area intrusion evaluation unit (28) is configured for an evaluation of the depth map for objects or forbidden intrusions into predefined protected areas (32) of the monitoring area (12), and wherein moreover a shutdown output (36) is provided via which a safety related shutdown command can be output by the protected area intrusion evaluation unit (28, 34) to a dangerous machine (30) upon detection of a forbidden intrusion.

10. The 3D-camera (10) according to any of the preceding claims,
wherein at least one FPGA is provided on which the stereoscopic evaluation unit, the region extension evaluation unit, the post-processing unit and/or the protected area intrusion evaluation unit are implemented, and wherein in particular at a region extension in a single line-wise pass according to claim 5 the region extension runs at a doubled processing frequency compared with the reading of lines from the image sensors (16a, 16b).

11. A method for the stereoscopic generation of a three-dimensional depth map with distance pixels, wherein a first two-dimensional image and a second two-dimensional image of a monitoring area (12) are recorded from different perspectives, and the two images a combined to the depth map by a stereoscopic method, and quality information about the determined distance pixels is obtained, wherein an initial state is assigned to the distance pixels based on the quality information, wherein the possible initial states are at least the states "reliable" and "unreliable",
**characterized in that**
a distance pixel (52) is set from the state "unreliable" to the state "reliable" with unmodified depth value in a region extension when at least one distance pixel in the state "reliable" is present in the neighbourhood (54) whose distance value differs by at most a depth offset threshold.

12. The method according to claim 11,
wherein the requirements for the quality information can be set, and wherein in particular during the initial assignment requirements are placed on the quality information that are so high that only a small fraction of the distance pixels obtains the state "reliable".

13. The method according to claim 11 or 12,
wherein the quality information is obtained in at least one of the following ways:
- as a correlation measure for evaluating the similarity of structured in the first and second image which are the basis for the disparity estimation for the distance calculation of the distance pixel in the stereoscopic evaluation unit,
- by a texture evaluation of sections of the images;
- by an evaluation of side maxima by which it is decided whether a correlation maximum whereupon the disparity estimation is based is sufficiently pronounced;
- by a right-left-test which compares distance values from a correlation of the first image and the second image with distance values from a correlation of the second image and the first image.

14. The method according to any of claims 11 to 13,
wherein the range extension for all distance pixels (52) is calculated in real-time in a single pass through the distance pixels (52), and wherein in particular each line is processed once in reading direction considering the three neighbouring distance pixels (54a) of the previous line and the direct predecessor distance pixel (54a) in the current line, and once against the reading direction considering the direct succeeding distance pixel (54b).

15. The method according to any of claims 11 to 14,
wherein the depth map is evaluated for objects or forbidden intrusions into predefined protected areas (32) of the monitoring area (12), and wherein a safety-related shutdown command is output to a dangerous machine upon (30) detection of a forbidden intrusion, and wherein in particular prior to an evaluation for objects and forbidden intrusions it is tested whether the depth map is filled sufficiently dense with "reliable" distance pixels

## Revendications

1. Caméra 3D stéréoscopique (10) comprenant un premier capteur d'images (16a) et un second capteur d'images (16b) pour la prise d'une première image bidimensionnelle et d'une seconde image bidimensionnelle d'une zone de surveillance (12) depuis des perspectives différentes, dans laquelle est prévue une unité d'évaluation de stéréoscopie (28) qui est réalisée pour calculer à partir des deux images une carte de profondeur tridimensionnelle de pixels d'éloignement et engendrer via les pixels d'éloignement déterminés des informations de qualité, dans laquelle il est prévu une unité d'évaluation (28) d'extension de zone au moyen de laquelle les états initiaux "fiable" et "non fiable" peuvent être attribués aux pixels d'éloignement au moyen des informations de qualité,
**caractérisée en ce que**
l'unité d'évaluation d'extension de zone (28) est en outre réalisée pour une extension de zone dans laquelle un pixel d'éloignement (52), lorsque la valeur de profondeur est modifiée, est passé de l'état "non fiable" vers l'état "fiable" lorsqu'il existe dans le voisinage (54) au moins un pixel d'éloignement dans l'état "fiable", dont la valeur d'éloignement diffère au maximum d'un seuil de saut en profondeur.

2. Caméra 3D (10) selon la revendication 1,
dans laquelle l'unité d'évaluation d'extension de zone (28) est réalisée pour régler les exigences vis-à-vis des informations de qualité, et en particulier pour imposer, lors de l'attribution des états initiaux, des exigences aussi élevées aux informations de qualité que seule une faible part des pixels d'éloignement reçoit l'état "fiable".

3. Caméra 3D (10) selon l'une des revendications précédentes,
dans laquelle l'unité d'évaluation de stéréoscopie (28) est réalisée pour obtenir des informations de qualité suivant l'une au moins des manières suivantes :
- à titre de mesure de corrélation pour évaluer la similitude de structures dans la première et dans la seconde image, qui forment la base de l'estimation de disparité pour le calcul d'éloignement du pixel d'éloignement dans l'unité d'évaluation de stéréoscopie,
- au moyen d'une évaluation de texture dans des détails des images,
- au moyen d'une évaluation maximale annexe au moyen de laquelle a lieu une décision pour savoir si un maximum de corrélation formant la base de l'estimation de disparité est suffisamment marqué,
- au moyen d'un test gauche/droite, qui compare des valeurs d'éloignement lors de la corrélation de la première image avec la seconde image avec des valeurs d'éloignement lors de la corrélation de la seconde image avec la première image.

4. Caméra 3D (10) selon l'une des revendications précédentes,
dans laquelle l'état initial "fiable" ne peut être attribué par l'unité d'évaluation d'extension de zone (28) que si toutes les informations de qualité relatives à un pixel d'éloignement satisfont un critère minimum, ou bien si un produit scalaire de groupage d'un vecteur de pondération prédéterminé avec les informations de qualité concernant un pixel d'éloignement satisfait un critère minimum.

5. Caméra 3D (10) selon l'une des revendications précédentes,
dans laquelle l'unité d'évaluation d'extension de zone (28) est réalisée pour calculer l'extension de zone pour tous les pixels d'éloignement (52) dans une unique passe en ligne par le pixel d'éloignement (52) en temps réel, et ici en particulier pour traiter chaque ligne une fois en direction de lecture en tenant compte des 3 pixels d'éloignement voisins (54a) de la ligne précédente et du pixel d'éloignement précédent direct (54a) dans la ligne actuelle, et une fois à l'encontre de la direction de lecture en tenant compte du pixel d'éloignement successif direct (54b).

6. Caméra 3D (10) selon l'une des revendications précédentes,
dans laquelle l'unité d'évaluation d'extension de zone (28) est réalisée pour attribuer l'état initial "invalide" à des pixels d'éloignement au moyen des informations de qualité, et des pixels d'éloignement avec l'état "invalide" sont exclus de l'extension de zone successive.

7. Caméra 3D (10) selon l'une des revendications précédentes,
dans laquelle l'unité d'évaluation d'extension de zone (28) est réalisée pour attribuer l'état initial "non fiable" ou "invalide" à des pixels d'éloignement à l'extérieur d'une zone de travail de la caméra 3D (10).

8. Caméra 3D (10) selon l'une des revendications précédentes,
dans laquelle une unité de post-traitement (28) est prévue, laquelle est conçue pour contrôler la carte de profondeur pour savoir si l'occupation avec des pixels d'éloignement "fiables" est suffisamment dense pour des évaluations successives.

9. Caméra 3D (10) selon l'une des revendications précédentes,
dans laquelle une unité d'évaluation de violation de zone protégée (28) est réalisée pour évaluer la carte de profondeur vis-à-vis d'objets ou d'interventions inadmissibles dans des zones protégées (32) prédéfinies de la zone de surveillance (12), et dans laquelle il est en outre prévu une sortie de coupure (36) via laquelle un ordre de coupure à des fins de sécurité peut être émis par l'unité d'évaluation de zone protégée (28, 34) vers une machine dangereuse (30), dès qu'une intervention inadmissible est reconnue.

10. Caméra 3D (10) selon l'une des revendications précédentes,
dans laquelle il est prévu au moins un FPGA sur lequel l'unité d'évaluation de stéréoscopie, l'unité d'évaluation d'extension de zone, l'unité de post traitement et/ou l'unité d'évaluation de violation de zone protégée sont mises en oeuvre, et dans laquelle en cas d'extension de zone, dans une unique passe en ligne selon la revendication 5, l'extension de zone se déroule avec doublement de la fréquence de travail par rapport à la lecture des lignes des capteurs d'images (16a, 16b).

11. Procédé pour produire de manière stéréoscopique une carte de profondeur tridimensionnelle à partir de pixels d'éloignement, dans lequel une première image bidimensionnelle et une seconde image bidimensionnelle d'une zone de surveillance (12) sont prises à partir de perspectives différentes, et les deux images sont traitées par calcul avec
un procédé stéréoscopique pour donner la carte de profondeur et des informations de qualité concernant le pixel d'éloignement déterminé sont engendrées, dans lequel on attribue un état initial aux pixels d'éloignement au moyen des informations de qualité, les états initiaux possibles comprenant au moins les états "fiable" et "non fiable", **caractérisée en ce que**
on procède à une extension de zone dans laquelle un pixel d'éloignement (52) est passé, sans variation de la valeur de profondeur, de l'état "non fiable" à l'état "fiable" lorsqu'il existe dans le voisinage (54) au moins un pixel d'éloignement à l'état "fiable", dont la valeur d'éloignement diffère au maximum d'un seuil de saut en profondeur.

12. Procédé selon la revendication 11,
dans lequel les critères pour l'attribution de l'état initial sont réglables, et en particulier lors de l'attribution de l'état initial, on pose aux informations de qualité des exigences aussi élevées que seule une faible part des pixels d'éloignement reçoit l'état "fiable".

13. Procédé selon la revendication 10 ou 11,
dans lequel les informations de qualité sont obtenues au moins suivant l'une des manières suivantes :
- comme mesure de corrélation pour évaluer la similitude de structures dans la première et dans la seconde image, qui sont à la base de l'estimation de disparité pour le calcul d'éloignement du pixel d'éloignement dans l'unité d'évaluation de stéréoscopie,
- au moyen d'une évaluation de texture de détails des images,
- au moyen d'une évaluation maximum annexe au moyen de laquelle on décide si un maximum de corrélation à la base de l'estimation de disparité est suffisamment marqué,
- au moyen d'un test gauche/droite, qui compare des valeurs d'éloignement lors de la corrélation de la première image avec la seconde image à des valeurs d'éloignement lors de la corrélation de la seconde image avec la première image.

14. Procédé selon l'une des revendications 10 à 13,
dans lequel l'extension de zone pour tous les pixels d'éloignement (52) est calculée en temps réel en une unique passe en ligne par les pixels d'éloignement (52), et on traite ici en particulier chaque ligne une fois en direction de lecture en tenant compte des 3 pixels d'éloignement voisin (54a) de la ligne précédente et du pixel d'éloignement précédent direct (54a) dans la ligne actuelle et une fois à l'encontre de la direction de lecture en tenant compte du pixel d'éloignement successif direct (54b).

15. Procédé selon l'une des revendications 10 à 14,
dans lequel la carte de profondeur est évaluée vis-à-vis d'objets ou d'interventions inadmissibles dans des zones protégées prédéfinies (32) de la zone de surveillance (12) et, lors de la reconnaissance d'une intervention inadmissible on délivre un ordre de coupure à des fins de sécurité à une machine dangereuse (30), et avant une évaluation vis-à-vis d'objets et d'interventions inadmissibles, on contrôle en particulier si l'occupation de la carte de profondeur avec des pixels d'éloignement "fiables" est suffisamment dense.
